Europäisches Patentamt

European Patent Office

Office européen des brevets

(19)

(11) EP 0 502 518 B1

(12) EUROPÄISCHE PATENTSCHRIFT

(45) Veröffentlichungstag und Bekanntmachung des Hinweises auf die Patenterteilung:
08.05.1996 Patentblatt 1996/19

(51) Int Cl.⁶: **G06K 19/07**, G06K 7/10

(21) Anmeldenummer: 92103763.6

(22) Anmeldetag: 05.03.1992

(54) **Verfahren zur drahtlosen Übertragung von Daten auf einen Datenträger**

Wireless data transmission method on a data carrier

Méthode de transmission de données sans fil sur un porteur de données

(84) Benannte Vertragsstaaten:
DE FR GB IT

(30) Priorität: 07.03.1991 DE 4107311

(43) Veröffentlichungstag der Anmeldung:
09.09.1992 Patentblatt 1992/37

(73) Patentinhaber: TEMIC TELEFUNKEN microelectronic GmbH
D-74072 Heilbronn (DE)

(72) Erfinder: Klosa, Klaus
W-8000 München 2 (DE)

(74) Vertreter: Maute, Hans-Jürgen, Dipl.-Ing.
TEMIC TELEFUNKEN microelectronic GmbH
Postfach 35 35
D-74025 Heilbronn (DE)

(56) Entgegenhaltungen:
EP-A- 0 297 688          EP-A- 0 377 257
WO-A-89/01208          DE-A- 4 100 693
US-A- 4 546 241

# Beschreibung

Die Erfindung betrifft ein Verfahren zur drahtlosen Übertragung von Daten auf einen eine Halbleiterschaltung aufweisenden Datenträger, insbesondere Chip- oder IC-Karte, sowie eine Schaltungsanordnung zur Durchführung dieses Verfahrens.

In den letzten Jahren sind zunehmend sogenannte Chip-Karten oder IC-Karten in Gebrauch, wobei hierunter Datenträger zu verstehen sind, die sowohl die bekannten Kreditkarten für Geldausgabeautomaten, Kartentelefone und andere Endgeräte der Kommunikationstechnik als auch Identifikationskarten für die Zugangskontrolle von sicherheitsempfindlichen Bereichen umfassen. Solche IC-Karten enthalten eine mechanisch geschützte integrierte Halbleiterschaltung mit einem nichtflüchtigen Speicher, der personenbezogene und/oder nichtpersonenbezogene Daten enthält. Zum Auslesen der gespeicherten Daten und - gebebenenfalls in geänderter Form - zum Einlesen von Daten ist eine Steuerlogik erforderlich. In der Regel ist für den auf der IC-Karte untergebrachten Schaltkreis keine eigene Stromversorgung vorgesehen, sondern die zum Auslesen der Information erforderliche Stromversorgung wird durch das jeweilige Lesegerät, das die gespeicherte Information ausliest, drahtlos durchgeführt, beispielsweise induktiv oder kapazitiv. Gleichzeitig erfolgt auch die Datenübertragung drahtlos durch geeignete Modulation der Spannungsversorgung, so daß beispielsweise durch Feldbedämpfung der Schaltkreis Daten zum Lesegerät übertragen kann.

Der vorliegenden Erfindung liegt die Aufgabe zugrunde, ein Verfahren zur drahtlosen Übertragung von Daten auf einen Datenträger der genannten Art anzugeben, das einfach durchzuführen ist und zum Betrieb wenig Energie benötigt. Eine weitere Aufgabe besteht darin, eine Schaltungsanordnung zur Durchführung dieses Verfahrens anzugeben.

Die erstgenannte Aufgabe wird durch die kennzeichnenden Merkmale des Patentanspruches 1 gelöst.

Hiernach besteht das Wesen der Erfindung darin, zur Datenübertragung mittels des Hochfrequenzfeldes eine Amplitudentastung vorzunehmen. Hierbei liegt die Information in der Anzahl der Perioden des Hochfrequenzfeldes zwischen zwei Sendepausen. Dies ermöglicht verschiedene Vereinbarungen für die zu übertragenden Daten zu treffen. Neben der Übertragung der logischen Pegel "0" und "1" können Kommandobefehle oder Startsequenzen übertragen werden. Dadurch, daß während der Sendepausen das Taktsignal ruht, wird der Energieverbrauch minimiert. Das erfindungsgemäße Übertragungsverfahren erlaubt eine sehr einfache Ansteuerung des Senders, wonach ein Rechtecksignal zur Ansteuerung der Senderspule ausreichend ist.

Gemäß einer vorteilhaften Weiterbildung des erfindungsgemäßen Verfahrens wird zwecks Zuordnung der Periodenanzahl der zwischen zwei Sendepausen gesendeten Perioden des Hochfrequenzfeldes zu den Logikpegeln bzw. den Kommandobefehlen diese Periodenanzahl mit disjunkten Zahlenbereichen verglichen, wobei jeweils jedem Zahlenbereich ein Logikpegel bzw. ein Kommandobefehl zugeordnet ist. Hierdurch ergibt sich ein besonders sicheres Übertragungsverfahren, da zur Identifizierung der Information anhand der Periodenanzahl dieselbe nicht genau einem einzigen Zahlenwert entsprechen muß, sondern nur einem bestimmten, zusammenhängenden Zahlenbereich zuordenbar sein muß.

Bei einer weiteren bevorzugten Ausführungsform der Erfindung sind die Sendepausen kurz gegenüber den Sendezeiten, so daß zur Überbrückung des Spannungsausfalles nur ein Speicherkondensator mit geringer Kapazität erforderlich ist.

Das für den Zähler sowie die Steuereinheit erforderliche Taktsignal kann einerseits gemäß einer Ausführungsform der Erfindung aus dem empfangenen Hochfrequenzfeld abgeleitet werden oder andererseits bei einer anderen Ausführungsform aus einem Oszillatorsignal gewonnen werden.

Die weitere genannte Aufgabe der Erfindung wird durch die kennzeichnenden Merkmale der Patentansprüche 6 und 7 gelöst.

Gemäß Patentanspruch 6 steuert die Empfangseinheit sowohl einen Spannungsdetektor als auch eine Takterzeugungseinrichtung. Der Spannungsdetektor detektiert die Sendepausen, während die Takterzeugungseinrichtung aus dem Empfangssignal ein Taktsignal für einen Zähler und der Steuereinheit erzeugt. Darüberhinaus steuert der Spannungsdetektor die Takterzeugungseinrichtung sowie den Zähler und eine Auswerteeinheit an. Diese Auswerteeinheit generiert aus den von dem Zähler ihr zugeführten Zählerstände die Daten und führt sie der Steuereinheit zu. Die Daten werden dann in einem Speicher, beispielsweise einem EEROM-Speicher abgespeichert.

Dagegen wird gemäß Patentanspruch 7 das Taktsignal aus einem Oszillatorsignal abgeleitet, wobei lediglich zum Ein- und Ausschalten der Takterzeugungseinrichtung dieselbe von dem Spannungsdetektor angesteuert wird.

Da zur Überbrückung des Spannungsausfalles nur ein Speicherkondensator mit geringer Kapazität erforderlich ist, wird gemäß einer weiteren Ausführungsform der erfindungsgemäßen Schaltungsanordnung dieser Kondensator als On-Chip-Kondensator mit der Halbleiterschaltung als integrierte Schaltung ausgeführt.

Im folgenden soll das erfindungsgemäße Verfahren anhand eines Ausführungsbeispieles im Zusammenhang mit den Zeichnungen dargestellt und erläutert werden. Es zeigen:

Figur 1    ein Blockschaltbild eines Datenträgers mit einem Ausführungsbeispiel der erfindungsgemäßen Schaltungsanordnung,

Figur 2    Impulsdiagramme zur Erläuterung der Funktion der erfindungsgemäßen Datenübertragung,

Figur 3    ein weiteres Impulsdiagramm zur Erläuterung der Funktionsweise der erfindungsgemäßen Schaltung,

Figur 4    weitere Impulsdiagramme zur Erläuterung der Funktionsweise des erfindungsgemäßen Verfahrens und

Figur 5    ein Blockschaltbild einer Variante des Ausführungsbeispieles nach Figur 1.

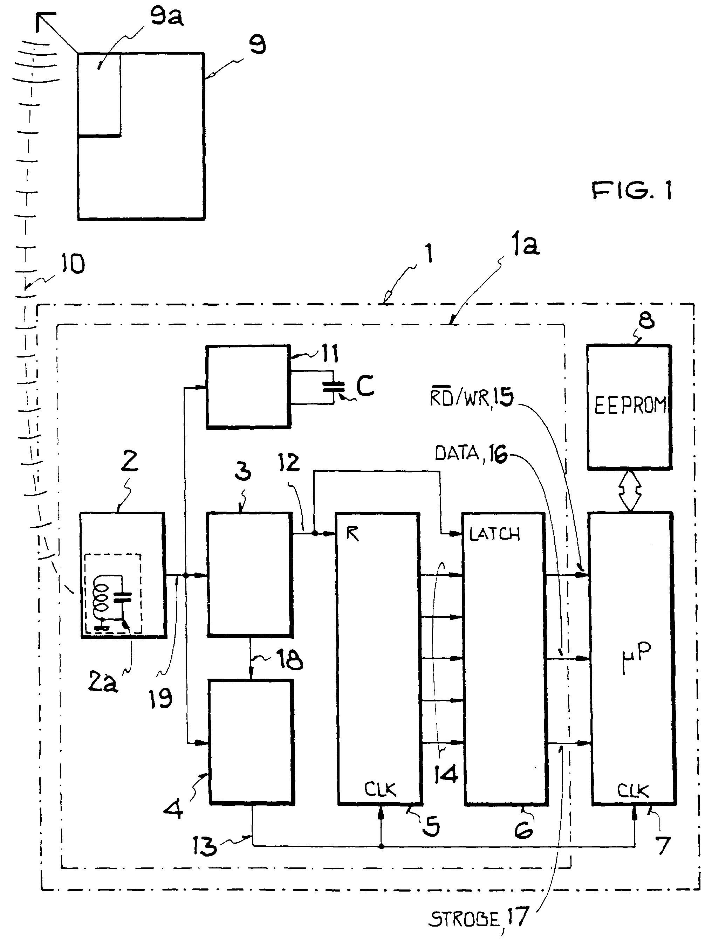

Die Figur 1 zeigt das Blockschaltbild einer integrierten Schaltung 1, wie sie beispielsweise in einer IC-Karte implantiert ist. Über ein Lese- oder Steuergerät 9 mit einem ein Hochfrequenzfeld 10 erzeugenden Hochfrequenzsender 9a erfolgt das drahtlose Auslesen (Lesemodus) der auf einem EEPROM-Speicher 8 abgelegten Information. Über dieses Lesegerät 9 sind auch Daten in den genannten Speicher 8 einzuschreiben (Schreibmodus), wozu die erfindungsgemäße Schaltungsanordnung dient, dessen Ausführungsbeispiel mit dem Bezugszeichen 1a bezeichnet ist. Diese Schaltungsanordnung 1a zur Durchführung des erfindungsgemäßen Verfahrens entschlüsselt die in dem Hochfrequenzfeld 10 enthaltene Information und führt sie der Steuereinheit 7, beispielsweise einem Mikroprozessor zu, weshalb diese Schaltungsanordnung 1a auch als Decoder bezeichnet werden kann. Die zum Auslesen erforderlichen Funktionseinheiten sind in dieser Figur 1 nicht dargestellt.

Die IC-Karte ist zur Energie- und Datenübertragung induktiv mit dem Lesegerät 9 über das Hochfrequenzfeld 10 gekoppelt. Hierzu enthält eine Empfangseinheit 2 einen Resonanzkreis 2a, deren Ausgangssignal einer Spannungsversorgungseinheit 11 zugeführt wird, die ihrerseits die erforderliche Betriebsspannung für die einzelnen Komponenten der IC-Karte zur Verfügung stellt.

Zusätzlich wird das Ausgangssignal der Empfangseinheit 2 sowohl einem Spannungsdetektor 3 als auch einer Takterzeugungseinheit 4 zugeführt. Die Takterzeugungseinheit 4 erzeugt aus dem zugeführten Empfangssignal den Systemtakt und führt ihn einem Zähler 5 und der Steuereinheit 7 zu. Der Spannungsdetektor 3, die Takterzeugungseinheit 4, der Zähler 5 sowie eine Auswerteeinheit 6 bilden den oben schon genannten Decoder 1a, während dieser Decoder 1a zusammen mit der Empfangseinheit 2, der Spannungsversorgungseinheit 11, der Steuereinheit 7 und dem Speicher 8 die integrierte Schaltung 1 der IC-Karte bilden.

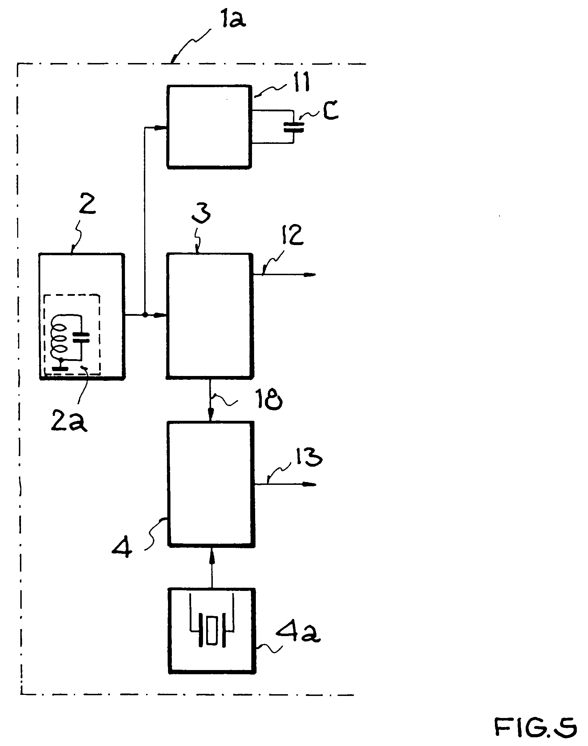

Anstatt den Takt aus dem empfangenen Hochfrequenzfeld 10 abzuleiten, kann er auch mittels eines Oszillators 4a gemäß Figur 5 erzeugt werden. Hierzu wird lediglich das Oszillatorsignal der Takterzeugungseinheit 4 zugeführt, eine direkte Verbindung zur Empfangseinheit 2 ist daher nicht erforderlich.

Das erfindungsgemäße Verfahren besteht darin, zur Übertragung von Daten von dem Sender 9 auf die IC-Karte das Hochfrequenzfeld 10 zu takten, also in gewissen Abständen aus- und wieder einzuschalten, wobei die kodierte Information in der Anzahl der gesendeten Perioden des Hochfrequenzfeldes 10 zwischen zwei Sendepausen liegt. So kann beispielsweise die Vereinbarung getroffen werden, daß bei Übermittlung von 8 bis 15 Perioden eine logische "0" und bei Übermittlung von 16 bis 23 Perioden eine logische "1" vorliegen soll. Der Decoder 1a kann somit durch Zählen der zwischen zwei Sendepausen übermittelten Perioden die übermittelte Information entschlüsseln. Es sind auch weitere Codierungen zur Übermittlung zusätzlicher Informationen denkbar, beispielsweise für Startsequenzen oder Kommandobefehle. Von Vorteil ist es, bei diesem Verfahren die OFF-Zeit kurz gegenüber der ON-Zeit zu wählen, so beträgt beispielsweise bei einer Feldfrequenz von 125 kHz eine 10-Perioden umfassende OFF-Zeit 80 μsec.

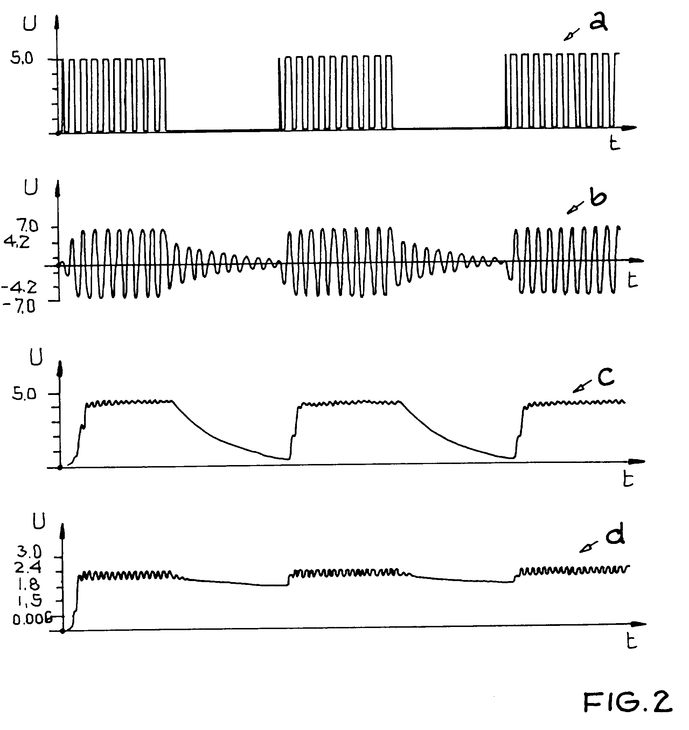

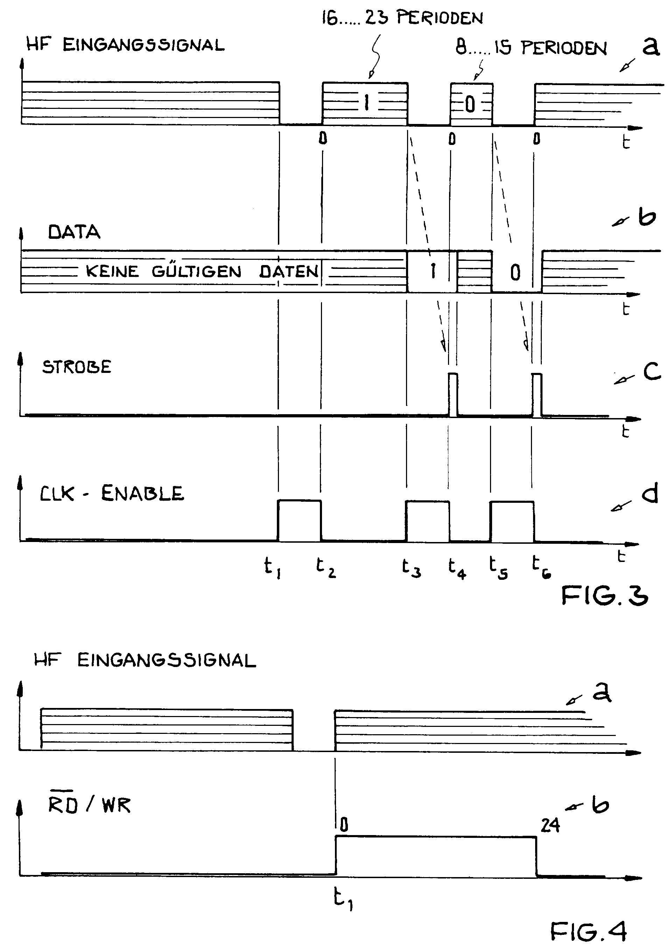

Die Diagramme a bis d der Figur 2 zeigen die Übermittlung einer "0"-Sequenz. Hierbei zeigt das Diagramm a das von dem Sender 9a des Lesegerätes 9 erzeugte Hochfrequenzfeld 10, das durch Ansteuerung der Sendespule mit einem Rechtecksignal zustande kommt. Hiernach wird der Sender 9a nach 10 Perioden abgeschaltet, und nach 10 Perioden wieder eingeschaltet. Eine Pause dauert also 10 Perioden. Das Diagramm b zeigt den Spannungsverlauf an dem Schwingkreis 2a der Empfangseinheit 2. Hiernach ist die Schwingkreisspannung während der Sendezeiten konstant, nimmt jedoch während der Sendepausen einen gedämpften Verlauf an. Das Diagramm c zeigt nun die aus der Kurve nach dem Diagramm b gleichgerichtete Hüllkurve zur Dektierung der Abschaltzeitpunkte des Hochfrequenzfeldes 10. Die Abschaltzeitpunkte werden über eine Leitung 12 (Figur 1) als Reset-Signal dem Zähler 5 und als Latch-Signal der Auswerteeinheit 6 zugeführt. Weiterhin dient dieses Signal der Takterzeugungseinrichtung 4 zum Stoppen des Taktes über eine Leitung 18 gemäß Figur 1, siehe hierzu auch Figur 3, Diagramm a und d, wo die Zeitpunkte $t_1$, $t_3$ und $t_5$ diese Abschaltzeitpunkte markieren. Aus der pulsierenden Gleichspannung nach dem Diagramm c der Figur 2 wird eine gepufferte Versorgungsspannung mittels der Spannungsversorgungseinheit 11 und dem On-Chip-Kondensator C erzeugt, wie sie im Diagramm d dargestellt ist. Somit kann der Spannungsausfall während der Sendepausen mit der On-Chip-Kapazität bewirkt werden, da während der Sendepausen kein Takt erzeugt wird und lediglich die zum Abschaltzeitpunkt des Hochfrequenzfeldes aufgelaufenen Zählerstände des Zählers 5 in der Auswerteeinheit 6 festgehalten werden müssen. Somit kommt der integrierte Schaltkreis 1 der IC-Karte ohne externe Elemente, beispielsweise Stützkondensatoren für die Spannungsversorgung aus.

Wie schon erwähnt wurde, werden die bis zu einem Ausschaltzeitpunkt des Hochfrequenzfeldes 10 aufgelaufenen Zählerstände des Zählers 5 zwecks späterer Auswertung in der Auswerteeinheit 6 gespeichert. Hierzu ist der Zähler 5 gemäß Figur 1 über Leitungen 14 mit der Auswerteeinheit 6 verbunden. Setzt das Hochfrequenzfeld 10 wieder ein - siehe Zeitpunkte $t_2$, $t_4$ und $t_6$ gemäß Figur 3a und d -, wird der Zähler 5 zurückgesetzt und beginnt von neuem wieder hochzuzählen.

Die Figur 3a zeigt nochmals das Prinzip der Datenübertragung mittels des Hochfrequenzfeldes 10. Hiernach wird das Hochfrequenzfeld 10 zu einem Zeitpunkt $t_1$ ausgeschaltet und wird erst, beispielsweise nach 10 Perioden zum Zeitpunkt $t_2$ wieder eingeschaltet. Die Einschaltdauer beträgt dann beispielsweise 16 bis 23 Perioden, weshalb dies eine Übertragung einer logischen "1" bedeutet. Zum Zeitpunkt $t_3$ wird das Feld wieder für 10 Perioden abgeschaltet, so daß es zum Zeitpunkt $t_4$ durch die Empfangseinheit 2 wieder detektierbar ist. Nun bleibt aber zur Übermittlung einer logischen "0" das Hochfrequenzfeld nur 8 bis 15 Perioden lang eingeschaltet, wird also zum Zeitpunkt $t_5$ abgeschaltet und erst nach 10 weiteren Perioden, also zum Zeitpunkt $t_6$ wieder eingeschaltet. Das zu dieser Übertragung der logischen "1" und "0" gehörende Steuersignal (CLK-ENABLE) für den Takt zeigt die Figur 3d, wonach während dieser Sendepausen kein Taktsignal erzeugt wird.

Die integrierte Schaltung 1 nach Figur 1 muß zwei Betriebsarten, nämlich den Lesemodus und den Schreibmodus unterscheiden. Hierzu dient das $\overline{\text{RD}}$/WR-Signal, das über eine Leitung 15 von der Auswerteeinheit 6 der Steuereinheit 7 zugeführt wird. Hiernach muß der Steuereinheit 7 mitgeteilt werden, ob die auf dem Speicher 8 abgelegten Daten zum Lesegerät 9 gesendet werden müssen, oder ob von diesem Lesegerät 9 Daten zu empfangen sind. Beginnt nach einer Unterbrechung der Sender 9a zu einem Zeitpunkt $t_1$ wieder zu senden, wird der Zähler auf 0 zurückgesetzt und das Signal auf der Leitung 15 auf H-Pegel gesetzt. Dies bedeutet, daß die Steuereinheit 7 zur Aufnahme von Daten bereit ist. Erfolgt keine erneute Abschaltung des Hochfrequenzfeldes 10 zählt der Zähler bis Zählerstand 24 und setzt dann auf der Leitung 15 den H-Pegel wieder zurück. Da die Übertragung eines logischen "1"-Wertes maximal 23 Perioden dauern kann, kann also nach 24 Perioden keine Information übermittelt werden. Dies ist in der Figur 4a und b dargestellt. Schaltet jedoch das Hochfrequenzfeld 10 zum Zeitpunkt $t_3$ gemäß der Figur 3 ab, wird der bis zu diesem Zeitpunkt erreichte Zählerstand in der Auswerteeinheit 6 festgehalten. Schaltet sich der Takt zum Zeitpunkt $t_4$ wieder ein, erfolgt die Weiterverarbeitung dieses Zählerstandes, indem nun eine logische "1" detektiert wird. Nun wird ein Strobe-Befehl auf der Leitung 17 erzeugt, so daß die auf der Datenleitung 16 gemäß Figur 3b anliegende Information von der Steuereinheit 7 in den Speicher 8 übernommen wird.

Das erfindungsgemäße Verfahren erlaubt eine sichere Übertragung der Daten auch bei wechselnden Abständen zum Lesegerät 9 auf die integrierte Schaltung 1. Insbesondere ist die eingesetzte Frequenz unkritisch, so daß sie aus einem weiten Frequenzbereich gewählt werden kann.

Die in Figur 1 dargestellte integrierte Schaltung 1 für eine IC-Karte ist in vielfältiger Weise auch in Identifikationssystemen einsetzbar, wobei weitere in Figur 1 nicht dargestellte Funktionen, beispielsweise eine Uhr installierbar sind.

Wie schon darauf hingewiesen wurde, ist der Stromverbrauch für die integrierte Schaltung 1 nach Figur 1 sehr gering, insbesondere wenn die Schaltung als CMOS-Schaltung realisiert wird. Somit kann der aktuelle Zustand der Schaltung während der Sendepausen mit einem relativ kleinen On-Chip-Kondensator gehalten werden.

## Patentansprüche

1. Verfahren zur drahtlosen Übertragung von Daten auf einen eine Halbleiterschaltung (1) aufweisenden Datenträger, insbesondere Chip- oder IC-Karte, wobei aus einem Hochfrequenzfeld (10), in das der Datenträger gebracht wird, die Versorgungsspannung der Halbleiterschaltung (1) erzeugt wird, gekennzeichnet durch folgende Merkmale:

   a) zur Übertragung von Logikpegeln und Kommandobefehlen wird das Hochfrequenzfeld (10) derart ein- und ausgeschaltet, daß die Dauer der Sendepausen konstant ist, jedoch die Sendedauer in Abhängigkeit der zu übertragenden Logikpegel und Kommandobefehle jeweils unterschiedlich lang ist,

   b) die Sendedauer bestimmt sich aus der Anzahl der gesendeten Perioden des Hochfrequenzfeldes (10),

   c) zur Rückgewinnung der mit dem Hochfrequenzfeld (10) gesendeten Daten wird die Anzahl der zwischen zwei Sendepausen empfangenen Perioden des Hochfrequenzfeldes (10) festgestellt, gespeichert und ausgewertet,

   d) Zur Bestimmung der Periodenanzahl wird ausschließlich während der Sendezeiten ein Taktsignal erzeugt.

2. Verfahren nach Anspruch 1, dadurch gekennzeichnet, daß zwecks Zuordnung der Periodenanzahl der zwischen zwei Sendepausen gesendeten Perioden des Hochfrequenzfeldes (10) zu den Logikpegeln bzw. den Kommandobefehlen die besagte Periodenanzahl mit disjunkten Zahlenbereichen verglichen wird, wobei jeweils jedem Zahlenbereich ein Logikpegel bzw. ein Kommandobefehl zugeordnet ist.

3. Verfahren nach einem der Ansprüche 1 oder 2, dadurch gekennzeichnet, daß die Sendepausen kurz gegenüber den Sendezeiten sind.

4. Verfahren nach einem der Ansprüche 1 bis 3, dadurch gekennzeichnet, daß aus dem Hochfrequenzfeld (10) ein Taktsignal gewonnen wird.

5. Verfahren nach einem der Ansprüche 1 bis 3, dadurch gekennzeichnet, daß zur Erzeugung eines Taktsignales ein Oszillator vorgesehen ist.

6. Schaltungsanordnung zur Durchführung des Verfahrens nach einem der Ansprüche 1 bis 4, wobei die Halbleiterschaltung (1) eine Steuereinheit (7) mit einem Speicher (8) aufweist, gekennzeichnet durch folgende Merkmale:

a) zur Detektion des Hochfrequenzfeldes (10) ist eine Empfangseinheit (2) vorgesehen, die die empfangenen Signale einem Spannungsdetektor (3), einer Takterzeugungseinheit (4) sowie einer Spannungsversorgungseinheit (11) zuführt,

b) ferner ist ein Zähler (5) sowie eine Auswerteeinheit (6) vorgesehen,

c) die Takterzeugungseinheit (4) führt dem Zähler (5) und der Steuereinheit (7) ein Taktsignal zu,

d) der Spannungsdetektor (3) steuert in Abhängigkeit des getakteten Hochfrequenzfeldes (10) die Takterzeugungseinheit (4) und führt dem Zähler (5) bzw. der Auswerteeinheit (6) ein Reset- bzw. Latch-Signal zu,

e) der Zähler (5) führt seine Zählerstände zur Auswertung der Auswerteeinheit (6) zu, die ihrerseits die aus den Zählerständen generierten Daten an die Steuereinheit (7) weiterleitet.

7. Schaltungsanordnung zur Durchführung des Verfahrens nach einem der Ansprüche 1 bis 3 und 5, wobei die Halbleiterschaltung (1) eine Steuereinheit (7) mit einem Speicher (8) aufweist, gekennzeichnet durch folgende Merkmale:

a) zur Detektion des Hochfrequenzfeldes (10) ist eine Empfangseinheit (2) vorgesehen, die die empfangenen Signale einem Spannungsdetektor (3) und einer Spannungsversorgungseinheit (11) zuführt,

b) ferner ist ein Zähler (5) sowie eine Auswerteeinheit (6) vorgesehen,

c) weiterhin ist eine Takterzeugungseinheit (4) vorgesehen, die mittels des Oszillators (4a) ein Taktsignal erzeugt, das dem Zähler (5) und der Steuereinheit (7) zugeführt wird,

d) der Spannungsdetektor (3) steuert in Abhängigkeit des getakteten Hochfrequenzfeldes (10) die Takterzeugungseinheit (4) und führt dem Zähler (5) bzw. der Auswerteeinheit (6) ein Reset- bzw. Latch-Signal zu,

e) der Zähler (5) führt seine Zählerstände zur Auswertung der Auswerteeinheit (6) zu, die ihrerseits die aus den Zählerständen generierten Daten an die Steuereinheit (7) weiterleitet.

8. Schaltungsanordnung nach Anspruch 6 oder 7, dadurch gekennzeichnet, daß zur Erzeugung der Versorgungsspannung der Spannungsversorgungseinheit (11) ein Speicherkondensator (C) zugeordnet ist, der als On-Chip-Kondensator mit der als integrierte Schaltung ausgeführte Halbleiterschaltung (1) integriert ist.

**Claims**

1. A process for the wireless transmission of data on a data carrier, in particular a chip- or IC- card, comprising a semiconductor circuit (1), where the supply voltage of the semiconductor circuit (1) is generated from a high-frequency field (10) into which the data carrier is introduced, characterised by the following features:

a) for the transmission of logic levels and instruction commands, the high-frequency field (10) is switched on and off in such manner that the duration of the transmission pauses is constant but the duration of the transmission differs in length as a function of the logic levels and instruction commands to be transmitted,

b) the transmission duration is determined from the number of transmitted periods of the high-frequency field (10),

c) for the recovery of the data transmitted with the high-frequency field (10), the number of periods of the high-frequency field (10) received between two transmission pauses is determined, stored and evaluated,

d) for the determination of the number of periods, a clock signal is generated exclusively during the transmission times.

2. A process as claimed in Claim 1, characterised in that for the purpose of assigning the number of periods of the high-frequency field (10) transmitted between two transmission pauses to the logic levels and instruction commands, the aforesaid number of periods is compared with different numerical ranges, where each numerical range is in each case assigned a logic level and instruction command.

3. A process as claimed in one of Claims 1 or 2, characterised in that the transmission pauses are short compared to the transmission times.

4. A process as claimed in one of Claims 1 to 3, characterised in that a clock signal is obtained from the high-frequency field (10).

5. A process as claimed in one of Claims 1 to 3, characterised in that an oscillator is provided for the generation of a clock signal.

6. A circuit arrangement for the implementation of the process claimed in one of Claims 1 to 4, where the semiconductor circuit (1) comprises a control unit (7) with a memory (8), characterised by the following features:

   a) for the detection of the high-frequency field (10), a receiving unit (2) is provided which feeds the received signals to a voltage detector (3), to a clock generating unit (4) and to a voltage supply unit (11),

   b) a counter (5) and an evaluating unit (6) are also provided,

   c) the clock generating unit (4) feeds a clock signal to the counter (5) and to the control unit (7),

   d) the voltage detector (3) controls the clock generating unit (4) as a function of the clocked high-frequency field (10) and feeds a reset signal to the counter (5) and a latch signal to the evaluating unit (6),

   e) the counter (5) feeds its counts, for the purpose of evaluation, to the evaluating unit (6) which itself forwards the data generated from the counts to the control unit (7).

7. A circuit arrangement for the implementation of the process claimed in one of Claims 1 to 3 and 5, where the semiconductor circuit (1) comprises a control unit (7) with a memory (8), characterised by the following features:

   a) for the detection of the high-frequency field (10) a receiving unit (2) is provided which feeds the received signals to a voltage detector (3) and to a voltage supply unit (11),

   b) a counter (5) and an evaluating unit (6) are also provided,

   c) a clock generating unit (4) is additionally provided which, by means of the oscillator (4a), generates a clock signal which is fed to the counter (5) and to the control unit (7),

   d) the voltage detector (3) controls the clock generating unit (4) as a function of the clocked high-frequency field (10) and feeds a reset signal to the counter (5) and a latch signal to the evaluating unit (6),

   e) the counter feeds its counts, for the purpose of evaluation, to the evaluating unit (6) which itself forwards the data generated from the counts to the control unit (7).

8. A circuit arrangement as claimed in Claim 6 or 7, characterised in that for the generation of the supply voltage, the voltage supply unit (11) is assigned a storage capacitor (C) which is integrated as on-chip-capacitor with the semiconductor circuit (1) designed as an integrated circuit.

**Revendications**

1. Procédé de transmission sans fil de données à un support de données présentant un circuit à semi-conducteur (1), en particulier à une carte à puce ou circuit intégré, selon lequel la tension d'alimentation du circuit à semi-conducteur (1) est générée à partir d'un champ à haute fréquence (10), dans lequel est introduit le support de données, caractérisé en ce que:

   a) pour la transmission de niveaux logiques et d'ordres de commande, le champ à haute fréquence (10) est enclenché et coupé de manière que la durée des arrêts d'émission soient constante, mais la durée d'émission varie chaque fois en fonction du niveau logique et des ordres de commande à transmettre,
   b) la durée d'émission est fixée par le nombre de périodes émises du champ à haute fréquence (10),
   c) pour récupérer les données émises au moyen du champ à haute fréquence (10), le nombre de périodes du champ à haute fréquence (10) reçues entre deux arrêts d'émission est détecté, mémorisé et exploité,
   d) pour la détermination du nombre de périodes, un signal de rythme est généré exclusivement pendant les temps d'émission.

2. Procédé selon la revendication 1, caractérisé en ce que, à des fins de coordination du nombre de périodes du champ à haute fréquence (10) émises entre deux arrêts d'émission aux niveaux logiques ou aux ordres de commande, ce nombre de périodes est comparé avec des plages numériques (plage de nombres) disjointes, un niveau logique ou un ordre de commande étant coordonné chaque fois à chaque plage numérique.

3. Procédé selon la revendication 1 ou 2, caractérisé en ce que les arrêts d'émission sont courts par rapport aux temps d'émission.

4. Procédé selon une des revendications 1 à 3, caractérisé en ce qu'un signal de rythme est tiré du champ à haute fréquence (10).

5. Procédé selon une des revendications 1 à 3, caractérisé en ce qu'un oscillateur est prévu pour la génération d'un signal de rythme.

6. Dispositif de circuit pour la mise en oeuvre du procédé selon une des revendications 1 à 4, le circuit à semi-conducteur (1) présentant une unité de commande (7) avec une mémoire (8), caractérisé en ce que:

   a) pour la détection du champ à haute fréquence (10), on a prévu une unité de réception (2) qui envoie les signaux reçus à un détecteur de tension (3), à une unité génératrice de rythme (4) ainsi qu'à une unité d'alimentation électrique (11),
   b) un compteur (5) et une unité d'exploitation (6) sont prévus en plus,
   c) l'unité génératrice de rythme (4) envoie un signal de rythme au compteur (5) et à l'unité de commande (7),
   d) le détecteur de tension (3) commande l'unité génératrice de rythme (4) en fonction du champ à haute fréquence (10) rythmé, et envoie au compteur (5) et à l'unité d'exploitation (6) respectivement un signal de remise à zéro et un signal de verrouillage,
   e) le compteur (5) envoie ses positions à des fins d'exploitation à l'unité d'exploitation (6), laquelle transmet à son tour à l'unité de commande (7) les données générées à partir des positions du compteur.

7. Dispositif de circuit pour la mise en oeuvre du procédé selon une des revendications 1 à 3 et 5, le circuit à semi-conducteur (1) présentant une unité de commande (7) avec une mémoire (8), caractérisé en ce que:

   a) pour la détection du champ à haute fréquence (10), on a prévu une unité de réception (2) qui envoie les signaux reçus à un détecteur de tension (3) et à une unité d'alimentation électrique (11),
   b) un compteur (5) et une unité d'exploitation (6) sont prévus en plus,
   c) on a prévu en outre une unité génératrice de rythme (4) qui, au moyen d'un oscillateur (4a), génère un signal de rythme envoyé au compteur (5) et à l'unité de commande (7),
   d) le détecteur de tension (3) commande l'unité génératrice de rythme (4) en fonction du champ à haute fréquence (10) rythmé, et envoie au compteur (5) et à l'unité d'exploitation (6) respectivement un signal de remise à zéro et un signal de verrouillage,
   e) le compteur (5) envoie ses positions à des fins d'exploitation à l'unité d'exploitation (6), laquelle transmet à son tour à l'unité de commande (7) les données générées à partir des positions du compteur.

8. Dispositif de circuit selon la revendication 6 ou 7, caractérisé en ce que, pour la génération de la tension d'alimentation, on a coordonné à l'unité d'alimentation (11) un condensateur accumulateur (C) qui est intégré comme un condensateur sur puce conjointement avec le circuit à semi-conducteur (1) réalisé sous la forme d'un circuit intégré.

FIG. 1

FIG.2

HF EINGANGSSIGNAL

16.....23 PERIODEN

8.....15 PERIODEN

*a*

1    0

0        0        0        t

DATA    *b*

KEINE GÜLTIGEN DATEN    1    0    t

STROBE    *c*

t

CLK - ENABLE    *d*

t

$t_1$    $t_2$    $t_3$ $t_4$ $t_5$ $t_6$

**FIG.3**

HF EINGANGSSIGNAL

*a*

$\overline{RD}$ / WR    *b*

0    24

t₁

**FIG.4**

10

FIG.5